# FASCICULE DE BREVET EUROPEEN

(11) **EP 3 728 159 B1**
(45) Date de publication et mention de la délivrance du brevet: **01.09.2021**
(21) Numéro de dépôt: 18833964.2
(22) Date de dépôt: 18.12.2018
(51) Int. Cl.: C04B 28/00, C04B 12/00

(54) **MOUSSE DE GÉOPOLYMÈRE ET SON PROCÉDÉ DE FABRICATION**
GEOPOLYMERSCHAUM UND VERFAHREN ZUR HERSTELLUNG DAVON
GEOPOLYMER FOAM AND METHOD OF PRODUCING SAME

(30) Priorité: 19.12.2017 FR 1762432
(43) Date de publication de la demande: 28.10.2020
(73) Titulaire: Université Gustave Eiffel, 77454 Marne-la-Vallée Cedex 2 (FR)
(72) Inventeur: PITOIS, Olivier, 77210 Avon (FR); KADDAMI, Asmaa, 77420 Champs-sur-Marne (FR)
(74) Mandataire: Cabinet Beau de Loménie
(86) Numéro de dépôt international: PCT/FR2018/053362
(87) Numéro de publication internationale: WO 2019/122678

(56) Documents cités:
- EP-A1- 2 868 637
- EP-A1- 2 868 638
- WO-A1-2017/201566
- US-A- 5 244 726

## Description

### Domaine technique

La présente invention concerne une mousse de géopolymère, un procédé de fabrication de ladite mousse de géopolymère, ainsi que l'utilisation de cette mousse de géopolymère dans différents domaines notamment le domaine de la construction.

### Etat de la technique

Les géopolymères sont des polymères inorganiques qui peuvent être produits par réaction entre des aluminosilicates et des silicates alcalins en milieu alcalin, réaction qui conduit à des structures polymériques tridimensionnelles amorphes ou semi-cristallines, constituées de liaisons Si-O-AI. Les géopolymères sont généralement présentés comme ayant de bonnes résistances mécaniques, une bonne résistance au feu et aux attaques chimiques (acides en particulier) et peuvent être utilisés dans divers pans de l'industrie comme le bâtiment pour l'isolation thermique, le nucléaire pour le conditionnement de déchets, ou encore la chimie pour le piégeage d'éléments toxiques ou autres métaux lourds.

Les géopolymères peuvent être utilisés sous forme de mousses, dont les propriétés acoustiques et anti-inflammables sont établies. Ainsi la demande WO 2014/166998 décrit une mousse de géopolymère ayant une masse volumique de 100 à 900 kg/m³ et dont 40% à 65% de son volume interne est constitué de vides gazeux (aucun exemple ne supporte toutefois les caractéristiques annoncées). La demande WO 2015/144882 décrit un procédé de préparation de matériau de type mousse de géopolymère qui consiste à a) préparer un matériau composite comprenant une matrice géopolymère et un liquide organique (avantageusement une huile), puis b) éliminer le liquide organique par traitement thermique, oxydatif ou photo-dégradatif, ou par extraction via un fluide supercritique ou via des ultrasons. Les figures 1 à 3 de cette demande de brevet mettent en évidence une macroporosité de la mousse de géopolymère, avec une disparité très importante de la taille des pores. La demande WO 2016/153454 décrit l'obtention d'une mousse de géopolymère ayant une masse volumique de 190 à 250 kg/m³ (aucun exemple ne supporte toutefois cette caractéristique). Cette mousse de géopolymère est préparée par réaction de dégazage interne avec H₂O₂. La demande WO 2016/173950 décrit une mousse de géopolymère comprenant des nanoparticules d'un polymère de coordination métallique à ligands CN répondant à la formule [Alk⁺ₓ]Mⁿ⁺[M'(CN)ₘ]^{z-}. Cette mousse de géopolymère est obtenue en utilisant un entraîneur d'air. Un seul exemple d'obtention de mousse de géopolymère figure dans cette demande de brevet, ladite mousse ayant une masse volumique de 410 kg/m³, une porosité macroscopique de 73,3% et une porosité totale de 84%. La demande WO 2017/093797 décrit un procédé d'obtention d'une mousse minérale ultralégère à base de ciment Portland (une telle mousse étant présentée comme ayant une masse volumique à l'état sec allant de 20 à 300 kg/m³). Le procédé comprend l'ajout d'une source de sel d'aluminium qui fait fonction d'accélérateur de prise. Les valeurs rapportées pour la masse volumique à l'état sec des mousses minérales exemplifiées sont de l'ordre de 70 à 80 kg/m³. La demande WO 2017/174560 décrit une mousse de géopolymère dans laquelle est dispersée de la nanocellulose, à raison de 0,1 à 5% en masse dans la formulation de la mousse. La mousse de géopolymère contient des cellules ouvertes et des cellules fermées dont les proportions respectives dépendent de la quantité de nanocellulose utilisée.

Les mousses de géopolymère de l'art antérieur connu du Déposant ne présentent pas une morphologie des pores (taille des pores et taille des ouvertures des pores) contrôlée. Or, le contrôle de la morphologie des pores est essentiel pour certaines propriétés fonctionnelles du matériau, comme sa perméabilité et sa surface spécifique (pour les applications de filtration), ou son absorption acoustique (pour l'isolation acoustique).

Il a maintenant été découvert, et c'est le fondement de la présente invention, qu'il est possible de contrôler la morphologie des pores d'une mousse de géopolymère.

### Résumé de l'invention

Selon un premier aspect, l'invention concerne un procédé de préparation d'une mousse de géopolymère qui comprend la préparation d'une mousse aqueuse, la préparation d'une suspension de métakaolin, le mélange de la mousse aqueuse et de la suspension de métakaolin, et la prise du mélange obtenu. La mousse aqueuse contient un ou plusieurs tensioactifs et a une fraction volumique en eau inférieure ou égale à 8%.

Selon un deuxième aspect, l'invention concerne une mousse de géopolymère susceptible d'être obtenue par le procédé susmentionné. La mousse de géopolymère conforme à l'invention possède une masse volumique à l'état sec comprise dans la gamme d'environ 45 kg/m³ à environ 350 kg/m³.

Selon un troisième aspect, l'invention concerne l'utilisation de la mousse de géopolymère conforme à l'invention comme matériau de construction ou d'isolation.

### Description des figures

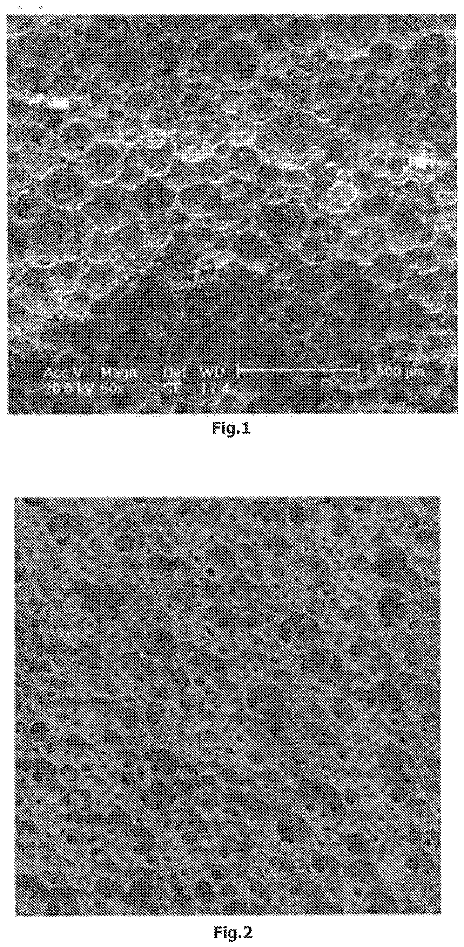

La figure 1 montre la morphologie d'une mousse minérale décrite dans l'article de Zhang : « Porous thermal insulation materials derived from fly ash using a foaming and slip casting method », Energy and Buildings 81 (2014) 262-267.
La figure 2 montre la morphologie d'une mousse de géopolymère décrite dans l'article de Hung : « Inorganic polymeric foam as a sound absorbing and insulating material », Construction and Building Materials 50 (2014) 328-334.
La figure 3 montre la morphologie d'une mousse de géopolymère décrite dans l'article de Bai : « Open-cell phosphate-based geopolymer foams by frothing », Materials Letters 188 (2016) 379-382.
Les figures 4 à 6 montrent la morphologie des mousses de géopolymère selon les exemples 1 à 3.
La figure 7 illustre la variation du diamètre moyen des ouvertures des pores d'une mousse de géopolymère selon l'invention, en fonction de la masse volumique de ladite mousse.

### Description détaillée de l'invention

Selon un premier aspect, l'invention concerne un procédé de préparation d'une mousse de géopolymère comprenant les étapes suivantes :
(i) préparation d'une mousse aqueuse ayant une fraction volumique en eau, à pression atmosphérique, inférieure ou égale à 8%, en ajoutant un ou plusieurs tensioactifs à de l'eau et en faisant buller un gaz inerte ou de l'air dans le mélange ;
(ii) préparation d'une suspension de métakaolin dans laquelle le rapport massique entre le liquide et le métakaolin est compris dans la gamme allant de 1,3 à 2,3 ;
(iii) mélange de la mousse aqueuse et de la suspension de métakaolin ; et
(iv) prise du mélange ainsi obtenu.

La mousse aqueuse est préparée en ajoutant un ou plusieurs tensioactifs à de l'eau de telle sorte que la fraction volumique en eau de la mousse, à pression atmosphérique, soit inférieure ou égale à 8%, de préférence inférieure ou égale à 5%, de préférence encore inférieure ou égale à 4%. Un gaz vient buller dans le mélange (eau + tensioactif) de sorte à générer des bulles de gaz. Il est possible d'utiliser de l'air ou bien un gaz inerte, tel que l'azote. Le débit du gaz et la taille du bulleur permettent de contrôler le diamètre des bulles.

Il est possible d'utiliser indifféremment un ou plusieurs tensioactifs anioniques, un ou plusieurs tensioactifs cationiques, un ou plusieurs tensioactifs non-ioniques, ou bien encore un mélange de tensioactifs de différentes catégories.

Dans un mode de réalisation de l'invention, on utilise un tensioactif non-ionique ou un mélange de tensioactifs non-ioniques. De façon avantageuse, on utilise comme tensioactif non-ionique un alkylpolyglycoside de formule :

R-O-(X)ₚ

dans laquelle :
- R représente le résidu d'un alcool gras ayant de 6 à 18 atomes de carbone, de préférence de 8 à 14 atomes de carbone ;
- X représente le reste d'un sucre en C5 ou en C6, de préférence le reste du glucose ou du xylose ; et
- p est un nombre dans la gamme allant de 1 à 5.

Le composé de formule R-O-(X)ₚ est disponible dans le commerce (par exemple dans la gamme Triton™ commercialisée par la société DOW, dans la gamme Clucopon™ commercialisée par la société BASF, dans la gamme Simulsol™ commercialisée par la société SEPPIC, etc.), ou bien il peut être préparé selon des méthodes bien connues de l'homme du métier.

La suspension de métakaolin est telle que le rapport massique entre le liquide et le métakaolin est compris dans la gamme allant de 1,3 à 2,3, de préférence dans la gamme allant de 1,5 à 2,2, de préférence encore dans la gamme allant de 1,7 à 2,1. Un tel rapport massique correspond à une quantité de métakaolin dans la suspension comprise dans la gamme allant de 30% à 43% en masse, de préférence dans la gamme allant de 31% à 40% en masse, de préférence encore dans la gamme allant de 32% à 37% en masse.

Le métakaolin (ou kaolin calciné) est un silicate d'alumine. C'est une pouzzolane artificielle à l'état amorphe, dont les particules présentent une forme allongée, et qui est obtenue par calcination et broyage d'une argile kaolinique. Le métakaolin susceptible d'être utilisé dans le cadre de la présente invention a une distribution de taille de particules D50 généralement comprise entre environ 1 µm et environ 2 µm. Un tel matériau est disponible dans le commerce, par exemple auprès des sociétés BASF, Levocell ou Imerys. La suspension de métakaolin comprend, outre le métakaolin lui-même, de l'eau et un silicate alcalin (M₂O + SiO₂, avec M = Na ou K, de préférence M = Na). Il n'y a pas d'exigence particulière quant au rapport molaire SiO₂/M₂O du silicate alcalin, un rapport molaire compris entre environ 1 et environ 2 étant toutefois avantageux. Le silicate alcalin peut provenir d'une solution alcaline de silicate commerciale, pouvant être utilisée telle quelle, ou bien d'une solution précurseur (commerciale ou non) dont on ajuste le rapport molaire SiO₂/M₂O à la valeur souhaitée avec une quantité appropriée d'hydroxyde alcalin MOH (anhydre ou en solution). L'eau présente dans la suspension de métakaolin peut provenir de la solution de silicate (commerciale ou précurseur), ou bien être ajoutée à celle-ci. Le silicate alcalin peut également être formé *in situ* en ajoutant de l'eau, de la silice et du M₂O au métakaolin.

Dans un mode de réalisation de l'invention, la suspension de métakaolin est constituée essentiellement d'eau, de métakaolin et de silicate alcalin. On entend par « constituée essentiellement de » le fait que la suspension ne comprend pas d'autres constituants susceptibles d'affecter les propriétés de la suspension de métakaolin. Dans un autre mode de réalisation de l'invention, la suspension de métakaolin est constituée uniquement d'eau, de métakaolin et de silicate alcalin.

Dans un mode de réalisation de l'invention, une partie du métakaolin est remplacée par des cendres volantes et/ou du laitier de haut fourneau. De manière avantageuse, jusqu'à 50% en masse, par exemple jusqu'à 40% en masse, jusqu'à 30% en masse ou encore jusqu'à 20% en masse du métakaolin est remplacé par les composés susmentionnés. Dans une variante de ce mode de réalisation, la suspension de métakaolin est constituée essentiellement (constituée uniquement) d'eau, de métakaolin, de cendres volantes et/ou de laitier de haut fourneau, et de silicate alcalin.

Les cendres volantes sont par exemple telles que définies dans la norme EN 450-1.

Le laitier de haut fourneau est par exemple tel que défini dans la norme EN 15167-1, et possède avantageusement une finesse comprise dans la gamme allant d'environ 2500 à environ 5000 Blaine (cm²/g). Bien que la nature du laitier de haut fourneau ne soit pas particulièrement critique, il est préférable que celui-ci soit du type basique et que le rapport pondéral CaO/SiO₂ soit compris dans la gamme allant d'environ 1,10 à environ 1,35. A titre d'exemple de laitier utilisable dans le cadre de la présente invention, on peut citer un matériau comprenant comme composants principaux (en pourcentage en masse), 33 à 40 % de SiO₂, 8 à 16 % d'Al₂O₃, 39 à 44 % de CaO, et 4 à 9 % de MgO. Par ailleurs, il est également préférable que le module chimique du laitier (teneur (%) en CaO x teneur (%) en Al₂O₃) soit supérieur à environ 450.

Il sera noté que dans le procédé conforme à l'invention, l'ordre des étapes (i) et (ii) est indifférent.

Selon un deuxième aspect, l'invention concerne une mousse de géopolymère susceptible d'être obtenue par le procédé susmentionné.

La mousse de géopolymère conforme à l'invention est caractérisée par un diamètre de pores moyen substantiellement uniforme. Au sens de la présente invention on entend par «diamètre substantiellement uniforme » le fait que l'écart type du diamètre moyen des pores, pour une distribution volumique, n'excède pas 10% dudit diamètre moyen. Le diamètre moyen des pores (Dp) peut être ajusté dans une gamme allant d'environ 100 µm à environ 5000 µm. Ainsi, si le diamètre moyen des pores, pour une distribution volumique, est égal à 500 µm, alors chaque pore de la mousse de géopolymère aura un diamètre compris dans la gamme 450 µm - 550 µm (500 µm ± 10%).

La mousse de géopolymère conforme à l'invention est également caractérisée par un diamètre moyen (do) des ouvertures des pores qui se situe dans gamme allant de 0,15 x Dp à 0,5 x Dp. La distribution de ces ouvertures est caractérisée par un écart Δ(do)/Dp inférieur à 8%.

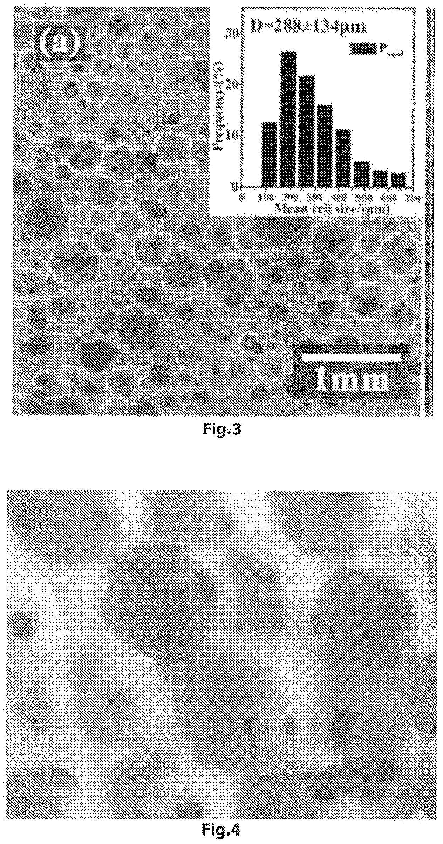

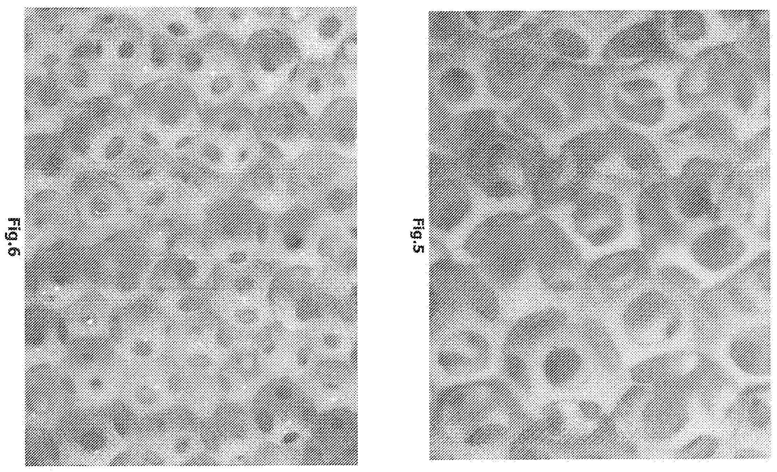

La méthode de mesure de la taille des pores repose sur la reconstruction d'une image 3D de l'échantillon grâce à une plateforme de micro-tomographie aux rayons X (source : micro-foyer Hamamatsu L10801 - 230kV, 200 W, 5µm -, imageur : flat-panel Paxscan Varian 2520V - 1920x1560 pixels, taille de pixel 127µm -, taille de voxel pour l'échantillon : 5 µm) et un traitement d'images 3D (logiciel libre Fidji), permettant d'identifier chaque pore du matériau et d'en déterminer le volume. La distribution annoncée est basée sur 24160 pores. Les tailles d'ouvertures sont mesurées par imagerie optique (microscope SteREO Discovery, Zeiss) de la surface des échantillons, à partir d'images telles que celles présentées sur les figures 4 à 6. La distribution obtenue est basée sur 200 mesures pour chaque échantillon.

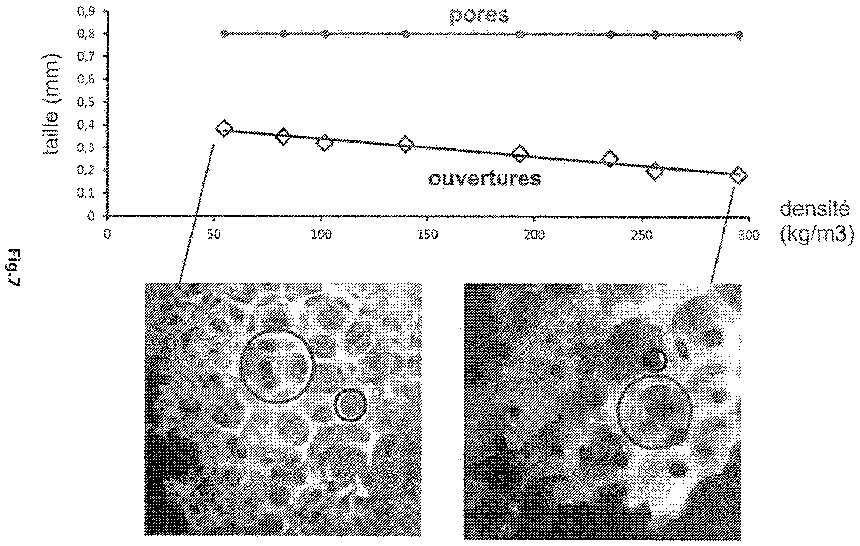

Le contrôle de la morphologie de la mousse de géopolymère conforme à l'invention est rendu possible par la mise en œuvre du procédé susmentionné. Il est ainsi possible de contrôler à la fois le diamètre moyen des pores (c'est le diamètre moyen des bulles de la mousse aqueuse) et le diamètre moyen des ouvertures des pores. Ces deux paramètres sont contrôlés de façon indépendante : pour un diamètre de pores fixé, le diamètre des ouvertures peut être ajusté par la densité de la mousse de géopolymère produite (c'est ce qu'illustre la figure 7). A densité fixée, le diamètre des ouvertures est modulé par le diamètre des pores.

La mousse de géopolymère conforme à l'invention présente les caractéristiques suivantes :
- une masse volumique à l'état sec (mesurée selon la norme EN 12390-7) comprise dans la gamme allant de 45 kg/m³ à 350 kg/m³, de préférence dans la gamme allant de 45 kg/m³ à 200 kg/m³, de préférence encore dans la gamme allant de 50 kg/m³ à 150 kg/m³ ;
- une conductivité thermique (mesurée selon la norme EN 12664) comprise dans la gamme allant de 0,035 W/K.m à 0,1 W/K.m.

Ces propriétés permettent d'envisager l'utilisation de la mousse géopolymère conforme à l'invention comme matériau dans le domaine de la construction et de l'isolation, ou encore comme matériau dans le domaine de la filtration/dépollution des fluides, ce qui constitue un troisième aspect de l'invention. Un quatrième aspect de l'invention concerne un matériau de construction ou d'isolation comprenant la mousse de géopolymère décrite ci-dessus.

Le procédé conforme à l'invention permet d'obtenir des mousses de géopolymères :
- ayant des masses volumiques faibles, pouvant aller jusqu'à 45 kg/m³ ;
- dont la morphologie des pores (taille des pores et taille des ouvertures des pores) est contrôlée, ce qui influe favorablement sur les propriétés fonctionnelles du matériau, comme sa perméabilité et sa surface spécifique (pour les applications de filtration), son absorption acoustique (pour l'isolation acoustique) ;
- qui sont résistantes au feu et durables.

Par ailleurs, le matériau frais (avant la prise) se prête plutôt bien au remplissage de moules, y compris avec des formes complexes, ou encore à des manipulations compatibles avec l'impression 3D.

Il est également à noter que la préparation des mousses de géopolymère, telle que décrite dans cette invention, ne nécessite aucun adjuvant particulier, et notamment aucun accélérateur de prise.

L'invention sera mieux comprise à l'aide des exemples ci-après donnés à titre purement illustratif.

### Exemple 1 : préparation d'une mousse de géopolymère

On a préparé une mousse aqueuse en ajoutant un tensioactif non-ionique (commercialisé par la société BASF sous la gamme Glucopon™) à de l'eau, de sorte à obtenir une fraction volumique en eau, à pression atmosphérique, de 2,1%, et en faisant buller de l'azote dans le mélange de sorte à obtenir un diamètre moyen des bulles de la mousse égal à 800 ± 50 µm.

On a parallèlement préparé une suspension de métakaolin en mélangeant un métakaolin (commercialisé par la société Imerys sous la gamme Argical™) avec une solution de silicate de sodium (rapport massique SiO₂/Na₂O = 1,01), de sorte à obtenir un rapport massique entre la quantité de liquide et la quantité de métakaolin égal à 2,0 (correspondant à une teneur en métakaolin dans la suspension égale à 33% en masse). La mousse aqueuse et la suspension de métakaolin ont ensuite été introduites via des entrées séparées dans un mélangeur statique hélicoïdal (diamètre externe 6 mm, longueur 60 mm, 9 unités) inséré dans un tube cylindrique de diamètre interne 6 mm, avec les débits suivants :
- mousse aqueuse = 20 mL/min
- suspension de métakaolin = 8,55 mL/min
ce qui conduit à un mélange ayant une fraction volumique d'air égale à 70%.

Une fois séchée, la mousse de géopolymère présente les caractéristiques suivantes :
- masse volumique = 311 kg/m³ ;
- diamètre moyen des pores = 797 ± 68 µm ;
- diamètre moyen des ouvertures = 150 ± 50 µm.

### Exemple 2 : préparation d'une mousse de géopolymère

On a répété le mode opératoire de l'exemple 1 en utilisant les débits d'introduction suivants dans le mélangeur statique :
- mousse aqueuse = 20 mL/min
- suspension de métakaolin = 1,05 mL/min
pour obtenir un mélange ayant une fraction volumique d'air égale à 95%.

Une fois séchée, la mousse de géopolymère présente les caractéristiques suivantes :
- masse volumique = 47 kg/m³ ;
- diamètre moyen des pores = 802 ± 70 µm ;
- diamètre moyen des ouvertures = 330 ± 60 µm.

### Exemple 3 : préparation d'une mousse de géopolymère

On a répété le mode opératoire de l'exemple 1 en utilisant une mousse aqueuse ayant une fraction volumique en eau, à pression atmosphérique, de 3,2%, et en utilisant les débits d'introduction suivants dans le mélangeur statique :
- mousse aqueuse = 20 mL/min
- suspension de métakaolin = 3,55 mL/min
pour obtenir un mélange ayant une fraction volumique d'air égale à 85%.

Une fois séchée, la mousse de géopolymère présente les caractéristiques suivantes :
- masse volumique = 135 kg/m³ ;
- diamètre moyen des pores = 509 ± 42 µm ;
- diamètre moyen des ouvertures = 150 ± 40 µm.

### Exemple 4 : variation du diamètre moyen des ouvertures des pores en fonction de la masse volumique de la mousse

On a préparé 8 mousses de géopolymère en répétant le mode opératoire de l'exemple 1, en utilisant à chaque fois une mousse aqueuse dont le diamètre moyen des bulles était égal à 800 ± 50 µm (afin d'obtenir un diamètre moyen identique pour les pores de la mousse). On a fait varier à chaque fois le débit d'introduction de la mousse aqueuse et de la suspension de métakaolin dans le mélangeur statique. Comme on peut le constater sur la figure 7, le diamètre moyen des ouvertures des pores diminue lorsque la masse volumique de la mousse augmente.

## Revendications

1. Procédé de préparation d'une mousse de géopolymère comprenant les étapes suivantes :
(i) préparation d'une mousse aqueuse ayant une fraction volumique en eau, à pression atmosphérique, inférieure ou égale à 8%, en ajoutant un ou plusieurs tensioactifs à de l'eau et en faisant buller un gaz inerte ou de l'air dans le mélange ;
(ii) préparation d'une suspension de métakaolin dont le rapport massique entre le liquide et le métakaolin est compris dans la gamme allant de 1,3 à 2,3 ;
(iii) mélange de la mousse aqueuse et de la suspension de métakaolin ; et
(iv) prise du mélange ainsi obtenu.

2. Procédé de préparation selon la revendication 1, dans lequel la mousse aqueuse a une fraction volumique en eau, à pression atmosphérique, inférieure ou égale à 5%.

3. Procédé selon la revendication 1 ou la revendication 2, dans lequel le ou les tensioactifs sont choisis parmi les tensioactifs anioniques, les tensioactifs cationiques, les tensioactifs non-ioniques, et les mélanges de ceux-ci.

4. Procédé selon la revendication 1, dans lequel la mousse aqueuse est obtenue à partir d'un ou plusieurs tensioactifs non-ioniques.

5. Procédé selon la revendication 4, dans lequel le tensioactif non-ionique est alkylpolyglycoside de formule :
R-O-(X)ₚ
dans laquelle :
- R représente le résidu d'un alcool gras ayant de 6 à 18 atomes de carbone, de préférence de 8 à 14 atomes de carbone ;
- X représente le reste d'un sucre en C5 ou en C6, de préférence le reste du glucose ou du xylose ; et
- p est un nombre dans la gamme allant de 1 à 5.

6. Procédé selon l'une quelconque des revendications 1 à 5, dans lequel la suspension de métakaolin présente un rapport massique entre le liquide et le métakaolin compris dans la gamme allant de 1,5 à 2,2.

7. Procédé selon l'une quelconque des revendications 1 à 6, dans lequel la suspension de métakaolin comprend de l'eau, un métakaolin et un silicate alcalin.

8. Procédé selon l'une quelconque des revendications 1 à 7, dans lequel jusqu'à 50% en masse du métakaolin est remplacé par des cendres volantes et/ou du laitier de haut fourneau.

9. Procédé selon l'une quelconque des revendications 1 à 8, dans lequel l'ordre des étapes (i) et (ii) est indifférent.

10. Mousse de géopolymère susceptible d'être obtenue par le procédé selon l'une quelconque des revendications 1 à 9, dont l'écart type du diamètre moyen des pores, pour une distribution volumique, n'excède pas 10% dudit diamètre moyen.

11. Mousse de géopolymère selon la revendication 10, qui possède une masse volumique à l'état sec, mesurée selon la norme EN 12390-7, comprise dans la gamme allant de 45 kg/m³ à 350 kg/m³.

12. Mousse de géopolymère selon la revendication 10 ou la revendication 11, qui possède une conductivité thermique, mesurée selon la norme EN 12664, comprise dans la gamme allant de 0,035 W/K.m à 0,1 W/K.m.

13. Utilisation de la mousse de géopolymère selon l'une quelconque des revendications 10 à 12 comme matériau de construction ou d'isolation, ou comme matériau de filtration ou de dépollution de fluides.

14. Matériau de construction ou d'isolation comprenant une mousse de géopolymère selon l'une quelconque des revendications 10 à 12.

## Patentansprüche

1. Verfahren zum Herstellen eines Geopolymerschaums, umfassend die folgenden Schritte:
(i) Herstellen eines wässrigen Schaums, der bei atmosphärischem Druck einen Volumenanteil an Wasser niedriger oder gleich 8 % aufweist, durch Hinzugeben eines oder mehrerer Tenside zu dem Wasser und durch Einblasen eines Inertgases oder von Luft in das Gemisch,
(ii) Herstellen einer Metakaolinsuspension, deren Massenverhältnis zwischen der Flüssigkeit und dem Metakaolin in dem Bereich von 1,3 bis 2,3 liegt,
(iii) Mischen des wässrigen Schaums und der Metakaolinsuspension und
(iv) Nehmen des so erhaltenen Gemischs.

2. Verfahren zum Herstellen nach Anspruch 1, wobei der wässrige Schaum bei atmosphärischem Druck einen Volumenanteil an Wasser kleiner oder gleich 5 % aufweist.

3. Verfahren nach Anspruch 1 oder Anspruch 2, wobei das oder die Tenside aus anionischen Tensiden, kationischen Tensiden, nichtionischen Tensiden und den Gemischen davon ausgewählt werden.

4. Verfahren nach Anspruch 1, wobei der wässrige Schaum ausgehend von einem oder mehreren nichtionischen Tensiden erhalten wird.

5. Verfahren nach Anspruch 4, wobei das nichtionische Tensid Alkylpolyglycosid mit der Formel ist:
R-O-(X)ₚ
wobei:
- R den Rest eines Fettalkohols darstellt, der 6 bis 18 Kohlenstoffatome, vorzugsweise 8 bis 14 Kohlenstoffatome, aufweist,
- X den Rest eines Zuckers an C5 oder an C6, vorzugsweise den Rest der Glucose oder Xylose darstellt, und
- p eine Zahl im Bereich von 1 bis 5 ist.

6. Verfahren nach einem der Ansprüche 1 bis 5, wobei die Metakaolinsuspension ein Massenverhältnis zwischen der Flüssigkeit und dem Metakaolin im Bereich von 1,5 bis 2,2 aufweist.

7. Verfahren nach einem der Ansprüche 1 bis 6, wobei die Metakaolinsuspension Wasser, ein Metakaolin und ein Alkalisilikat umfasst.

8. Verfahren nach einem der Ansprüche 1 bis 7, wobei bis zu 50 Masse-% des Metakaolins durch Flugaschen und/oder Hochofenschlacke ersetzt werden.

9. Verfahren nach einem der Ansprüche 1 bis 8, wobei die Reihenfolge der Schritte (i) und (ii) unerheblich ist.

10. Geopolymerschaum, der durch das Verfahren nach einem der Ansprüche 1 bis 9 erhalten werden kann, bei dem die Standardabweichung des mittleren Porendurchmessers für eine Volumenverteilung 10 % des mittleren Durchmessers nicht überschreitet.

11. Geopolymerschaum nach Anspruch 10, der eine im trockenen Zustand gemäß der Norm EN 12390-7 gemessene Dichte im Bereich von 45 kg/m³ bis 350 kg/m³ besitzt.

12. Geopolymerschaum nach Anspruch 10 oder Anspruch 11, der eine gemäß der Norm EN 12664 gemessene Wärmeleitfähigkeit im Bereich von 0,035 W/K.m bis 0,1 W/K.m besitzt.

13. Verwendung des Geopolymerschaums nach einem der Ansprüche 10 bis 12 als Bau- oder Isoliermaterial oder als Material zur Filterung oder Reinigung von Fluiden.

14. Bau- oder Isoliermaterial, das einen Geopolymerschaum nach einem der Ansprüche 10 bis 12 umfasst.

## Claims

1. A process for preparing a geopolymer foam comprising the following steps:
(i) preparing an aqueous foam having a water volume fraction at atmospheric pressure of 8% or less by adding one or more surfactants to water and bubbling an inert gas or air into the mixture;
(ii) preparing a metakaolin suspension with a weight ratio of liquid to metakaolin in the range of from 1.3 to 2.3;
(iii) mixing the aqueous foam and the metakaolin suspension; and
(iv) setting the resulting mixture.

2. The preparation process according to claim 1, wherein the aqueous foam has a water volume fraction at atmospheric pressure of 5% or less.

3. The process according to claim 1 or claim 2, wherein the surfactant(s) are selected from anionic surfactants, cationic surfactants, non-ionic surfactants, and mixtures thereof.

4. The method according to claim 1, wherein the aqueous foam is obtained from one or more non-ionic surfactants.

5. The method according to claim 4, wherein the non-ionic surfactant is an alkylpolyglycoside of the formula:
R-O-(X)ₚ
in which:
- R represents the residue of a fatty alcohol having 6 to 18 carbon atoms, preferably 8 to 14 carbon atoms;
- X represents the residue of a C5 or C6 sugar, preferably the residue of glucose or xylose; and
- p is a number in the range from 1 to 5.

6. The process according to any one of claims 1 to 5, wherein the metakaolin suspension has a weight ratio of liquid to metakaolin in the range of from 1.5 to 2.2.

7. The process according to any one of claims 1 to 6, wherein the metakaolin suspension comprises water, a metakaolin and an alkali silicate.

8. The process according to any one of claims 1 to 7, wherein up to 50% by weight of the metakaolin is replaced by fly ash and/or blast furnace slag.

9. The process according to any one of claims 1 to 8, wherein the order of steps (i) and (ii) is indifferent.

10. A geopolymer foam obtainable by the process according to any one of claims 1 to 9, the standard deviation of the mean pore diameter of which, for a volume distribution, does not exceed 10% of said mean diameter.

11. The geopolymer foam according to claim 10, which has a dry density, measured according to EN 12390-7, in the range of from 45 kg/m³ to 350 kg/m³.

12. The geopolymer foam according to claim 10 or claim 11, which has a thermal conductivity, measured according to EN 12664, in the range of from 0.035 W/K.m to 0.1 W/K.m.

13. Use of the geopolymer foam according to any one of claims 10 to 12 as a building or insulation material, or as a fluid filtration or clean-up material.

14. A building or insulating material comprising a geopolymer foam according to any one of claims 10 to 12.
